# EUROPEAN PATENT APPLICATION

(11) **EP 2 104 340 A1**
(43) Date of publication of application: **23.09.2009**
(21) Application number: 08250957.1
(22) Date of filing: 19.03.2008
(51) Int. Cl.: H04N 5/33

(54) **Combined thermal and visible imaging**

(71) Applicant: BARCO N.V., 8500 Kortrijk (BE)
(72) Inventor: Verstraete, Gerrit, 8740 Pittem (BE)
(74) Representative: McGowan, Cathrine

(57) **Abstract**

An imaging apparatus comprises a beam splitter that receives incident electromagnetic radiation and has a layer of transparent conductive oxide, such as indium tin oxide, on the front surface of a substrate transparent to visible and/or near infrared wavelengths. A camera detects thermal radiation reflected from the beam splitter for display of a thermal image, which is viewable in combination with an image formed from visible light transmitted by the beam splitter. The visible image may be obtained from a camera which detects the transmitted light, so that the thermal and visible images can be displayed on a display screen. Alternatively, the thermal image alone can be displayed on a display device, with the transmitted visible light directed to a viewing aperture for viewing via a semi-transparent mirror which also allows viewing of the thermal image on the display device, one image seen in transmission through the mirror and the other image seen in reflection.

## Description

### BACKGROUND OF THE INVENTION

The present invention relates to an apparatus and method for performing combined thermal and visual imaging.

The concept of imaging a single object or scene simultaneously with more than one spectral band of electromagnetic radiation is an attractive one. Merging or fusing the two detected images can yield more information to the viewer than either of the single images. Examples of spectral bands of interest for imaging include the conventional visible wavelength band, and the near, mid and far infrared wavelength bands.

Thermal imaging systems are sensitive to long infrared (about 8 µm to 14 µm) or mid-infrared (about 3 µm to 5 µm) wavelengths. All objects at "normal" temperatures around 300K emit radiation in the long infrared band, with a tail of the emission spectrum extending into the mid-infrared band. This thermal radiation is emitted by the object, in contrast to shorter wavelengths which are reflected by objects. Therefore, an imager sensitive to thermal radiation works just as well in complete darkness as in illuminated conditions, unlike visible wavelength cameras and near infrared imagers (operating over 800 nm to 1100 nm, such as night vision goggles) which require a source of illuminating radiation. Near infrared systems give monochrome images, which nevertheless have a relatively natural appearance to a human viewer used to visible wavelength images. However, at low levels of illumination, the images from these latter systems become very noisy. A local illumination source may then be needed to provide enough reflected radiation to be detected by the system. An example is the near infrared sources used for nocturnal wildlife filming, which provide light invisible to humans and animals. However, the range of the illuminating source will be limited. Also, the source can be detected, which is disadvantageous for covert imaging applications.

Overall, though, if the choice is limited to a single imaging system for operation in darkness or near-darkness, a near infrared system might be preferred to a thermal system merely because the images are more easily interpretable by the user owing to the similarity with visible wavelength images. If one is able to combine two imaging systems, a visible and thermal combination is beneficial in most cases (except in the case of very low illumination, when a near-infrared/thermal combination may be preferred). Images can be obtained in darkness or in illuminated conditions, and the thermal information is completely different from, and therefore complementary to, the visible information, thereby maximising the information presented to the user. The thermal imager creates more added value in combination with the visible imager than would a near infrared system.

However, it is confusing and fatiguing for the user to be presented with two separate images of the same scene. Therefore, it is preferred to overlap or otherwise merge the two images to create a single image for presentation to the user. An algorithm can be used to create a single usable image, which determines how to combine the full colour or monochrome information from the visible system with the thermal information, where thermal images are often presented in false colour with different temperature ranges mapped to different colours or shades. It is also necessary to take account of spatial factors when merging the images.

Optical components for visible imaging systems (lenses, mirrors and the like) are often made of glass, which is transparent to visible and near infrared wavelengths. However, thermal wavelengths are blocked by glass, so different materials (which may be opaque to visible wavelengths) are need to collect and direct the radiation in thermal imagers. Also, different sensors are needed for the two wavelength ranges. Therefore, two separate camera systems are required for a combined visible and thermal imager.

To integrate the two cameras into a single system, one could place the lenses for the two cameras side by side, as close as possible. The physical size of the lenses means that the two optical axes are spaced apart. Each camera system therefore images a slightly different scene, and parallax problems occur. When the images from the two cameras are merged, the separation between the images becomes very obvious, even though it may be only a few pixels. To address this, one image can be shifted before it is merged with the other, but this only works well for objects at one distance from the imaging system, because the amount of parallax varies with distance.

It is therefore preferable to use an arrangement in which the optical axes of the two cameras are coincident. Such an arrangement is known as a common aperture, because the radiation received by both cameras passes through an aperture or apertures (real or virtual) which are shared or at least highly overlapping.

One approach for realising a common aperture is to use a reflecting telescope topology. A reflecting telescope comprises a large parabolic mirror that collects radiation over a large aperture, and a small mirror placed in the path of the radiation at the focus of the mirror. The small mirror blocks part of the radiation what would otherwise fall onto the large mirror. Since the small mirror obstructs some of the radiation, one can place a small camera in front of the small mirror, facing in the same direction as the large mirror, without obstructing any more radiation. Suppose the small camera is a thermal imager, and the small mirror is replaced by a visual camera facing the large mirror. This produces a combined thermal and visible imager with a common aperture. However, the aperture of the thermal imager is a small subset of the aperture of the visible camera, which is a disadvantage because the thermal imager, which is typically less sensitive than a visible camera, receives less radiation. This can be addressed by interchanging the thermal imager and the visible camera, and replacing the large mirror with a parabolic reflector that can reflect the far infrared thermal radiation instead of visible light. In either configuration, however, the distance from the imaged object to the optical centre of the two cameras is different. For objects which are relatively close, this causes a small difference in magnification, which in turn produces an undesirable double image when the images from the two cameras are merged.

An alternative common aperture approach is to use a beam splitter arrangement. All the radiation enters the system through a common aperture and is incident onto a beam splitter, generally being a thin flat filter positioned at 45° to the incident light. A beam splitter is configured to reflect radiation in one wavelength range and transmit radiation in another wavelength range. For a combined thermal and visible system, therefore, one of the thermal waveband and the visible waveband is reflected and the other is transmitted. The 45° position allows the transmitted radiation to pass straight through, while the reflected radiation is deflected by 90°. The two types of radiation are therefore separated into two spatially separate paths, and can be directed to the relevant camera with appropriate lenses and mirrors. Thus, the cameras can have different physical locations, but still share the same aperture, so that the images they receive are fully coincident. Each camera can use all of the aperture, so neither has a limited performance compared to the other. Also, the optical paths for each camera can be made the same length to remove any differences in magnification.

The large separation between the thermal and visible wavebands suggests that dividing them with a beam splitter should be readily possible. This is evidenced by the commercial availability of beam splitters intended to separate thermal and visible radiation. Devices which reflect the thermal radiation and transmit the visible radiation are typically a glass substrate coated with a very thin metal layer, often a noble metal such as gold. For example, ISP Optics produces a gold-coated beam splitter with a two inch diameter (product BSP-DI-50-5). For the other alternative of a beam splitter for transmission of the thermal radiation and reflection of the visible radiation, the possibilities are limited by the requirement for the substrate to be transparent to the thermal radiation. A germanium substrate is suitable, for example coated with a very thin dielectric multilayer similar to the multilayers used in optical dielectric mirrors for reflecting visible light. Ferrante et al [1] describe a multilayer dielectric thin film stack suitable for coating onto germanium or electronic-grade silicon wafer substrates to give a dichroic beam splitter intended for use in a dual visible/long wavelength infrared system.

However, both types of beam splitter (germanium substrate or noble metal coating) are costly, and available commercially only in a small size. Hence, a usable combined thermal and visible imaging system based on these beam splitters is not attractive.

The present invention aims to address the above-mentioned disadvantages of combined thermal and visible imaging systems.

### SUMMARY OF THE INVENTION

Accordingly, a first aspect of the present invention is directed to an imaging apparatus comprising: a beam splitter arranged to receive incident electromagnetic radiation, the beam splitter comprising a layer of transparent conductive oxide on the front surface of a substrate transparent to visible and/or near infrared wavelengths; a first detector sensitive to thermal wavelengths and arranged to receive electromagnetic radiation reflected by the beam splitter; and a viewing arrangement configured such that a viewer can view a first image detected by the first detector and a second image formed from electromagnetic radiation transmitted through the beam splitter.

Thus, the present invention allows the advantages of a common aperture beam splitter arrangement to be used to achieve a dual imaging system for combined thermal and visible imaging, in combination with an improved beam splitter. Conductive oxides reflect thermal radiation and transmit visible and near infrared wavelengths so are ideally suited for an application which requires the separation of these two wavebands. They are less costly than and offer advantages over conventional choices such as noble metals. Also, the transparency at visible wavelengths is preferable over arrangements which reflect the visible light and transmit the thermal radiation, such as multilayer dielectric stacks, because a simple glass substrate can be used in place of the limited and expensive options for a substrate capable of transmitting thermal radiation, such as germanium.

The transparent conductive oxide may be indium tin oxide; this is considered to give the best performance. However, for lower performance requirements, less costly transparent conductive oxides may be used, such as Cd₂SnO₄, ZnO doped with aluminium or fluorine, or SnO₂ doped with fluorine or antimony.

Any substrate that is suitably transmissive at visible and/or near infrared wavelengths can be used. Glass is an attractive option. Furthermore, the substrate may be strengthened glass. Transparent conductive oxide can be successfully coated onto strengthened glass. This gives a more robust beam splitter advantageous for use in an apparatus intended to portable use.

The viewing arrangement may show the first image and the second image in a spatially coincident manner. This is more efficient and less fatiguing for the observer than images shown side by side or alternately, although these latter options may be used if desired.

In some embodiments, the viewing arrangement comprises a display screen, and the imaging apparatus further comprises: a second detector sensitive to visible and/or near infrared wavelengths and arranged to detect electromagnetic radiation transmitted through the beam splitter to obtain the second image; and a processor operable to receive the first image detected by the first detector and the second image detected by the second detector, process the images to merge them in a spatially coincident manner, and send the merged image for display on the display screen. This allows the images to be processed and combined in an manner which produces a single image adapted for the particular use to which the apparatus is put, or the needs of the observer. Particular features of one or both images may be highlighted, and the information in the two images can be presented in way which allows the user to extract the most from each image.

The display screen may comprise a liquid crystal display, for example.

The second detector may comprises a CCD array, or a CMOS sensor. Other detector types may also be used, however.

In other embodiments, the imaging apparatus may further comprise: a display device operable to display the first image from the first detector; and a mirror which is partially reflective and partially transparent to visible wavelengths; and the viewing arrangement is configured such that one of the first image as displayed on the display device and the second image comprising electromagnetic radiation transmitted through the beam splitter is viewed through the mirror and the other is viewed in reflection from the mirror. This is a simple way of combining the two images without the need for two detectors or complex image processing. Apparatuses according to such embodiments are well-suited for configuration as hand-held, goggle-style units for field work.

For example, the display device may be operable to project the first image from the first detector onto the mirror for viewing in reflection, with the second image being viewed through the mirror. In such an arrangement, the mirror may comprise a semi-reflective and semi-transparent layer on a rear surface of the beam splitter. This allows the visible image to be viewed directly through the beam splitter, with no requirement for any additional optical components to handle the visible radiation. Alternatively, a separate mirror may be used, located behind and substantially parallel to the beam splitter.

The viewing arrangement may be reversed, however. For example, the display device may be located behind the mirror for viewing of the first image through the mirror, and the mirror may receive electromagnetic radiation transmitted through the beam splitter, reflecting it for viewing of the second image in reflection from the mirror. Use of the mirror alone for reflecting the transmitted electromagnetic radiation presents the second image as a mirror image. The apparatus may therefore further comprise one or more additional mirrors arranged to collect electromagnetic radiation transmitted through the beam splitter and to direct the collected radiation onto the mirror for reflection of the second image. Any even number of mirrors (including the semi-transparent mirror and the additional mirror(s)) will produce a second image which is not a mirror image.

Apparatuses of this type may further comprise a secondary detector sensitive to visible wavelengths and arranged to detect incoming visible radiation; and a processor operable to receive a measurement of the intensity of the detected visible radiation and to adjust the intensity of the first image as displayed by the display device in accordance with the measured intensity. The image from the thermal camera can hence be adjusted to optimise its display in conjunction with the brightness of the visible image, which will vary with the ambient light level.

In a particularly simple arrangement, the secondary detector may be mounted on the exterior of a housing of the apparatus. Alternatively, the secondary detector may be placed inside the housing, for example positioned to detect visible radiation transmitted through the beam splitter, or reflected from the beam splitter or the mirror.

The display device may comprise an organic LED display, or a liquid crystal-on-silicon display.

The first camera may comprise a microbolometer.

The apparatus may further comprise an electrical power supply conductively connected to the layer of transparent conductive oxide such that the layer is operable as a heating element by passing current through the layer. This feature exploits the conductive nature of the oxide layer. Heating of the beam splitter in this way is useful for adapting the apparatus for use in cold, damp or humid weather conditions.

According to a second aspect of the present invention, there is provided an imaging method comprising: receiving incident electromagnetic radiation on a beam splitter comprising a layer of transparent conductive oxide on a front surface of a substrate transparent to visible and/or near infrared wavelengths; detecting electromagnetic radiation reflected by the beam splitter using a first detector sensitive to thermal wavelengths; and presenting for viewing a first image detected by the first detector and a second image formed from electromagnetic radiation transmitted through the beam splitter.

### BRIEF DESCRIPTION OF THE DRAWINGS

For a better understanding of the invention and to show how the same may be carried into effect reference is now made by way of example to the accompanying drawings in which:
Figure 1 shows a schematic representation of an imaging apparatus according to a first embodiment of the present invention;
Figure 2 shows a schematic representation of an imaging apparatus according to a second embodiment of the present invention;
Figure 3 shows a schematic representation of another example of an imaging apparatus according to the second embodiment; and
Figure 4 shows a schematic representation of a further example of an imaging apparatus according to the second embodiment.

### DETAILED DESCRIPTION

The present invention proposes to achieve a combined visible and thermal imaging system by using a beam splitter coated with a transparent conductive oxide to provide reflectivity for thermal wavelengths and transmission for visible and/or near infrared wavelengths.

Transparent conductive oxides are highly doped semiconductor materials with a large bandgap. They have a relatively high free carrier density which makes them highly conductive, although less conductive than metals. Also, the carrier density gives plasma-like properties (although the materials are solids). It is known that plasmas have a resonance frequency which determines a boundary between frequencies of electromagnetic radiation which when incident on the plasma are reflected and frequencies which are transmitted. Frequencies above the resonant frequency are transmitted. For the transparent conductive oxides, the resonance frequencies correspond to wavelengths in the range of about 1 µm to 2.5 µm. A higher carrier density produces a lower resonance wavelength. Thus, a transparent conductive oxide will reflect thermal radiation at long and mid infrared wavelengths, and transmit visible light and near infrared wavelengths below the resonance wavelength.

Examples of transparent conductive oxides include indium tin oxide (ITO), Cd₂SnO₄, ZnO doped with aluminium or fluorine, and SnO₂ doped with fluorine or antimony. ITO is more costly, but tends to perform better than the other examples.

This property of transparent conductive oxides has led to their use in the thermal management industry. Coatings of ITO are applied to windows to improve thermal insulation. These so-called low E (emissive) coatings reflect heat and help to reduce the heat transport through windows (keeping solar heat out in summer and keeping domestic heat inside in winter), while the transparency at visible wavelengths allows the windows to perform their usual function. Examples of such windows can be found in US 4,902,081 [2] and US 4,548,691 [3], while US 3,949,259 [4] describes a light-transmitting, thermal radiation reflecting filter that uses the same principle. The heat-reflecting properties of ITO are also utilised in an intrusion detector described in US 5,608,220 [5] to direct infrared radiation onto a pyroelectric sensor. The materials are also used in the display industry. Applications include shielding to reduce electromagnetic emissions from the front surface of a display or monitor, and heating of LCD displays to increase the response speed when the ambient temperature is low (so-called "heater plates"). This latter application exploits the conductivity of the materials. Finally, the reflective property of the transparent conductive oxides extends beyond the long wavelength thermal waveband, so these materials can also be used to reflect terahertz waves while transmitting visible or near infrared light below the resonance frequency, such as in a terahertz imaging system.

However, to date the thermal imaging industry has relied on noble metal coatings for reflection of thermal radiation, and substrates such as germanium for transmission of thermal radiation. Both these options are costly.

The inventor of the present invention has recognised the potential of transparent conductive oxides for thermal imaging, as an advantageous alternative to the present options of noble metals and germanium substrates. In particular, transparent conductive oxides, reflective at thermal wavelengths, can be coated onto glass, transmissive at visible wavelengths, so that such a combination is ideally suited for use in a combined thermal and visible imaging system where it is desirable to be able to separate thermal radiation from visible light for individual detection, image display and image processing.

Consequently, the present invention proposes use of a beam splitter comprising a layer of transparent conductive oxide on a glass substrate in a combined thermal and visible imager. The coating reflects thermal radiation, and transmits visible and near infrared radiation, which is further transmitted by the glass substrate. Thus the incident thermal and visible radiation is separated.

The fact the transparent conductive oxide can be configured as a beam splitter on a substrate transmissive to visible light allows the benefits of a common aperture beam splitter dual imaging system to be exploited. As explained in the "Background of the invention", a beam splitter-based system has advantages over the alternatives of a side-by-side system or a reflecting telescope system, in particular the avoidance of parallax and magnification mismatch. Thus, the invention allows the preferred imaging geometry to be used, while also offering further advantages over known arrangements of this geometry by improving the beam splitter.

Tests by the inventor have shown that transparent conductive oxide filters on glass substrates can transmit at least 80% of incident visible light while reflecting at least 80% of the thermal radiation. This performance is comparable with the gold-on-glass and multilayer dielectric stack-on-germanium filters presently used by the thermal imaging community. However, transparent conductive oxide filters, in particular ITO filters, are commercially produced in much larger volumes at much lower cost that the conventional beam splitters. Thus, the ease and cost of manufacture of an imaging system is improved. Also, the filters are generally produced in large standard sizes (such as 20 inches square or 50 cm square). Several square or rectangular beam splitters of a suitable size can be cut from such a filter. This is in contrast to the conventional filters which are often offered for sale only in a circular shape of a few centimetres diameter only. This is disadvantageously small and wrongly shaped for the present application. A small beam splitter limits the size of the common aperture, which limits the field of view and the size of the imaging lenses which in turn determine the required sensitivity of the detectors. A square or rectangular beam splitter matches the shape of the detector surfaces and therefore reduces the size of beam splitter required to direct light over the whole detector surface compared to a circular beam splitter.

Also, antireflection coatings can be provided on one or both sides of a transparent conductive oxide beam splitter to minimise the reflection of visible light incident on the beam splitter. This increases the amount of visible light transmitted through the beam splitter, thereby improving the visible image. Also, the possibility of "ghost" images in the visible image is greatly reduced, further improving the visible image. Furthermore, the antireflection coating can help to protect the transparent conductive oxide layer from harmful environmental conditions. The beam splitter can then be used as the window between the imaging components and the external environment, avoiding the need for a costly separate outer window transparent to both the thermal and visible radiation. Such antireflection coatings are not detrimental to the reflection of the thermal radiation, so can be included without disadvantage.

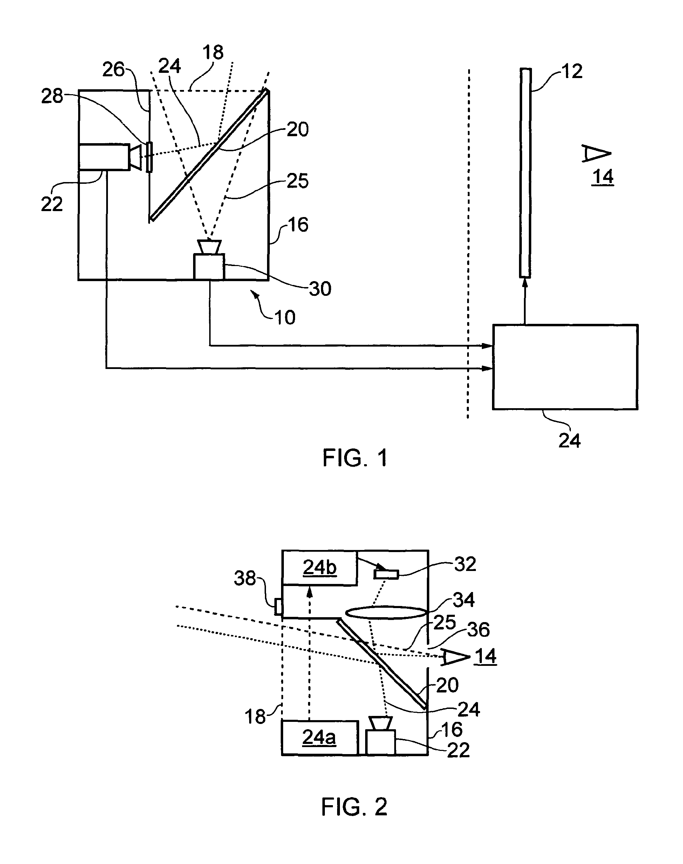

Figure 1 shows a simplified diagram of the basic components of an imaging apparatus according to a first embodiment of the present invention.

The apparatus comprises a "camera box" 10 for collecting the images in combination with a display screen 12 for displaying the images to an observer 14. The box 10 comprises a housing 16 containing the components for collecting the images. The housing 16 has a hole 18 in its front wall defining the common aperture through which the thermal radiation and the visible and/or near infrared light enters the imaging apparatus. The hole 18 can be open, or closed by a window. Such a window would have to transmit both thermal and visible and/or near infrared radiation, however, and may therefore be undesirable. Alternatively a shutter or other movable closure may be provided over the common aperture to allow the components within the housing to be protected when the apparatus is not in use

A beam splitter 20 comprising a coating or layer of transparent conductive oxide on the front surface of a glass substrate is positioned inside the box 16 to receive incident light entering through the common aperture 18. The beam splitter 20 is positioned at approximately 45° to the incident light in the conventional manner. Other angles may be used if desired.

A first detector 22 is positioned at one side of the beam splitter to detect incident radiation 24 reflected from the front surface of the beam splitter 20. Owing to the transparent conductive oxide layer, the reflected radiation is in the thermal waveband. Therefore, the first detector is sensitive to radiation in this waveband. The detector has a spatial extent so as to collect the radiation over an area to obtain an "image", and is in effect a thermal camera. A microbolometer can be used. Alternatively, other sensors sensitive to thermal radiation may be used, for example cooled quantum devices with appropriate sensitivity, such as a HgCdTe detector or a quantum well GaAs detector. The output of this detector 22 is supplied to a controller 24. The controller 24 contains electronics or software for operating the first detector 22, and a processor for processing the images detected by it.

If it is desired to seal the components of the box 10 from the environment, and no window is provided at the common aperture, the first detector 22 can be placed behind a partition 26 extending between the front wall of the housing 16 and the beam splitter 20. A window 28 made from a material transparent to thermal radiation, such as germanium, is mounted in the partition 26 such that radiation 24 reflected by the beam splitter 20 can reach the detector 22. The window 28 can be of a comparable size to the lens of the detector 22 and so can be small, flat and round. Therefore if a window is required it need not be costly.

A second detector 30 is positioned inside the housing 16 behind the beam splitter 20 to receive radiation from the common aperture and transmitted through the beam splitter. In view of the transparent nature of the transparent conductive oxide layer and the glass substrate, this transmitted radiation 25 is the visible and near infrared wavebands. The second detector 30 is therefore sensitive in one or both of these wavebands, for example a visible wavelength camera. Suitable examples include a CCD (charge coupled device) camera, a EMCCD (electron multiplying CCD) camera or a CMOS (complementary metal-oxide-semiconductor) camera for visible wavelengths, or a ICCD (intensified CCD) camera or a EBCCD (electron bombarded CCD) camera for near infrared wavelengths. As with the first detector, the output of the second detector is sent to the controller 24 for processing by the processor. The controller also operates the second detector 30.

Both detectors may include (integrally or as separate components) one or more lenses (not shown) for collecting and focussing the radiation from the beam splitter. Zoom lens arrangements may be provided to allow the angle of view to be adjusted. Also, the detectors need not be positioned as shown in Figure 1 (i.e. to one side of the beam splitter and behind the beam splitter). Instead, one or both of the detectors may be positioned elsewhere in the housing, with one or more reflectors arranged to receive the radiation from the beam splitter and direct it to the detector. This may allow a more compact configuration within the housing, so that the overall size of the apparatus can be reduced. If the detectors are located so that the length of the optical path from the front surface of the beam splitter to the detector is the same for both detectors, the magnification ratio for close objects compared to distant objects will be the same for both detectors, and the two images can be readily compared or combined.

The controller 24 performs conventional image processing as required (for example, noise reduction, colour balance adjustment, white balance adjustment, sharpening, etc.) and passes the processed image data for the images from the two detectors to the display screen 12 for display to the observer 14. Either or both of the images may be monochrome (not necessarily black and white, however) or polychrome. The two images could be displayed separately, either adjacently on the screen or one at a time at the choice of the observer. However, for enhanced information extraction and ease of use, the images may instead be displayed simultaneously and in a spatially coincident manner, as a single image combining the information of both images, such as by merging the images using a suitable algorithm. For example, the images may be alpha-blended. In alpha blending of two images, each pixel p_{d} in the displayed image at position i, j is given the value αp₁(i,j) + (1-α)p₂(i,j) where p₁ and p₂ are the pixels of the first and second images (in this case the thermal and visible images). In the simplest case, α = 0.5, giving a displayed image comprising 50% of each of the two input images.

The camera box 10, the controller 24 and the display screen 12 may be integrated into a single unit. Alternatively, the display screen 12 may be separate from the box 10, to allow an observer to view images recorded at a location remote from the observer. In this case, the controller 24 could be integrated with the box 10, integrated with the display screen 12, or may be separate from both. If the controller 24 is separate from one or both of the other components, the image data can be sent between the components either wirelessly or by physical connection with suitable data cables or telephone lines. The apparatus may be made suitably compact for portability if desired.

Figure 2 shows a simplified diagram of the basic components of an imaging apparatus according to an example of a second embodiment of the present invention. In this example, the apparatus comprises a housing 16, but no display screen 12. As with the first embodiment, the housing 16 has a front wall with a hole 18 that defines the common aperture for receipt of visible and thermal radiation. The hole 18 may or may not be closed by a window. A beam splitter 20 with a layer of transparent conductive oxide on its front surface is mounted inside the housing 16 at approximately 45° to the incident radiation entering the common aperture 18. A first detector or camera 22 operable to detect thermal radiation (which, as for the first embodiment, may be of any suitable type) is also mounted within the housing 16 to receive thermal radiation 24 entering the common aperture and reflected from the front surface of the beam splitter 20.

The image recorded by the thermal detector 22 is sent to a controller 24a inside the housing 16, which also has electronics and/or software for operating the thermal detector 22. A second controller 24b, also inside the housing, receives data representing the thermal image from the first controller 24a, and provides it to a display device 32 operable to display the thermal image detected by the thermal camera 22. The display device 32 is also mounted inside the housing, and may be any suitable type of display, such as an organic light emitting diode (OLED) microdisplay, a liquid crystal on silicon (LCOS) microdisplay illuminated with a white light source such as a white LED source via one or more optical components including a polarizer, or other type of microdisplay.

The display device 32 is positioned to project the displayed image onto the rear surface of the beam splitter 20 along an optical path at roughly 45° to the rear surface and roughly orthogonal to the incident radiation coming through the common aperture 18.

In this embodiment, the rear surface of the beam splitter 20 is provided with a "mirror" layer which is partially reflective and partially transmissive at visible wavelengths. The layer could be a thin metal layer or a polarising layer. Thus, the rear surface reflects the thermal image 27 projected onto it from the display device 32 in a direction substantially along the direction of the incident radiation. A viewing aperture 36, perhaps closed by a window transparent to visible wavelengths and/or provided with an eyepiece for comfort, is provided in the rear wall of the housing 16 opposite to the common aperture 18. The observer 14 can look through the viewing aperture 36 and observe the thermal image in reflection from the rear surface of the beam splitter 20.

Meanwhile, the visible radiation 25 entering the common aperture is transmitted through the transparent conductive oxide layer and the substrate of the beam splitter 20, and partially transmitted through the mirror layer on the rear surface of the beam splitter. Thus, the observer 14 looking through the viewing aperture 36 can see the visible image directly, viewed in transmission through the beam splitter without intermediate detection by any visible waveband detector or camera. By correct positioning and sizing of the thermal image projected onto the rear of the beam splitter 20, the thermal image can be superimposed onto the visual image with correct spatial coincidence, and the observer sees a combined image formed from the visible image and the thermal image. Relay optics 34 may be interposed between the display device 32 and the beam splitter for resizing and forming a virtual image of the thermal image at the same distance from the observer's eye as the visible image, so that the observer can focus on both images at the same time.

If the projected thermal image is formed from polarised light (for example projected using the above-mentioned LCOS microdisplay via a polariser), and the mirror layer on the rear of the beam splitter is a polarising layer correctly oriented with respect to the polarisation of the projected image, the projected thermal image is properly reflected, and just one polarisation state of the visible image is transmitted. Preferably, the vertical visible polarisation is transmitted while the horizontal polarisation is blocked. In this manner, the image quality is improved because unwanted specular reflections from water and the like are greatly reduced.

In Figure 2, two controllers 24a and 24b are shown, but a single control unit may be employed instead, or more than two, depending upon how it is desired to achieve the various functions required.

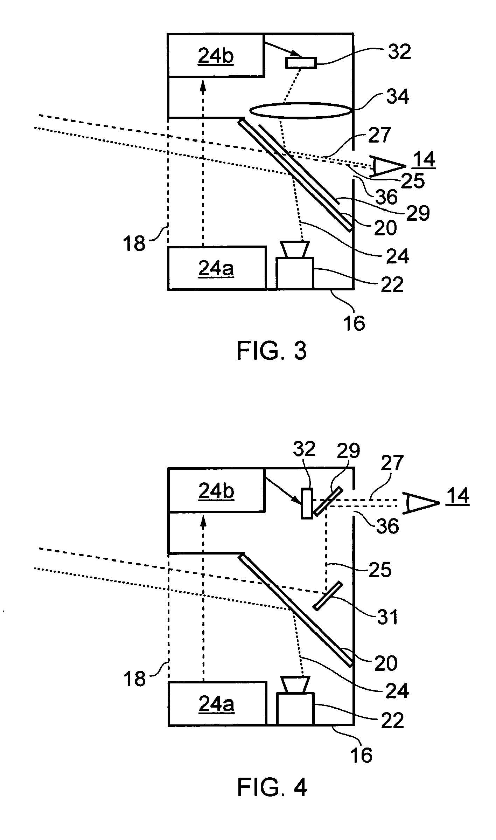

Figure 3 shows the basic components of a second example apparatus in accordance with the second embodiment. This apparatus is similar to that of Figure 2 and comprises mostly the same components. In this example, however, the semitransparent mirror layer which reflects the thermal image 27 and transmits the visible image 25 to the viewing aperture 26 is not located on the back of the beam splitter 20. Instead, it is provided on a separate substrate 29 transparent to visible radiation which is positioned behind the beam splitter 20 and substantially parallel thereto. This provides the same functionality as a mirror layer on the beam splitter, but in some cases it may be preferred to use two separate components, for example if the component manufacture is simpler. For compactness, the semi-transparent mirrored substrate 29 can be spaced from the beam splitter by just a few millimetres. Larger spaces may be acceptable in some apparatuses, however.

An apparatus of the second embodiment, in which the incident visible light is directed to the observer for viewing without intermediate detection by a camera, may alternatively be configured such that the visible image is reflected by the semi-transparent mirror and the thermal image shown on the display device is transmitted.

Figure 4 shows the basic components of an example apparatus configured in this way. Components in common with those of Figures 2 and 3 are labelled with the same reference numerals. The display device 32 and the viewing aperture 36 are aligned with one another such that the observer 14 can look through the viewing aperture "directly" at the thermal image 27 shown on the display device. A semi-transparent mirrored substrate 29, similar to that in Figure 3, is placed at an angle between the viewing aperture 36 and the display device 32, so the thermal image is actually viewed in transmission through the mirror.

A further mirror 31 (which may be fully or partially reflective at visible wavelengths) is placed behind and non-parallel to the beam splitter 20, in such a way that the incoming visible radiation 25 transmitted by the beam splitter 20 is reflected from the mirror 31 onto the semi-transparent mirror 29 at an appropriate angle for the semi-transparent mirror 29 to reflect the visible light through the viewing aperture 36 to the observer 14. The mirror 31 in effect projects the visible image onto the semi-transparent mirror 29 so that it overlaps with the thermal image transmitted through the semi-transparent mirror 29, allowing the observer to see the two images together. The observer sees the thermal image directly as displayed on the display device, and the visible image after two reflections.

A simpler arrangement can be envisaged that again places the display device behind the semi-transparent mirror for viewing of the thermal image in transmission, but positions the semi-transparent mirror to collect the visible light transmitted through the beam splitter for reflection of the visible image. Since the visible light undergoes only one reflection in this arrangement, the observer will see a mirror image of the scene being observed. This can be properly overlapped with the thermal image for viewing in combination if the display device is configured to show the thermal image as a mirror image.

An apparatus in accordance with the second embodiment can be configured as a small portable handheld unit similar to night-vision goggles, binoculars or a monocular. The lack of image processing to provide an image fully merged from two detected images may reduce the image quality, but the apparatus is more compact, lighter, simpler, less costly and well-suited for use in the field. A larger apparatus size is not precluded however.

The quality of the combination of the visible and thermal images experienced by the observer can vary depending on the general level of illumination. Under very bright conditions, the visible image may be very much more intense than the displayed thermal image, making the thermal image difficult to see. Conversely, dim illumination will give a much fainter visible image, which might be difficult to distinguish when combined with a brighter thermal image produced by the display device. If desired, this can be addressed according to examples of the second embodiment by detecting the intensity of the incident visible light, and adjusting the intensity of the display of the thermal image by the display device accordingly, to give an appropriate balance between the two images.

Any suitable photodetecting device, such as a photodiode sensitive to the visible waveband, or a lux meter, can be used. The detector should be positioned so as to receive incoming visible radiation, preferably over an acceptance angle roughly corresponding to the field of view of the thermal detector. For example, the detector may be mounted on the front of the apparatus, facing forwards. An example of this arrangement is shown in Figure 2, in which a detector 38 is positioned above the common aperture 18. Alternatively, the detector can be placed inside the housing 16. For example, the detector can be positioned to intercept some of the visible light as it is directed towards the viewing aperture 36, such as just behind the beam splitter and towards a corner of the beam splitter. In an arrangement like that shown in Figure 4, the first mirror 31 can be made partially transmissive to visible light, and the detector can be placed behind the mirror. As a further alternative, the detector could be placed next to the thermal detector 22, to receive visible light which is reflected from one or more surfaces of the beam splitter 20, the semitransparent mirror layer, or the separate semitransparent mirror 29 (Figure 3).

Wherever the detector is positioned, the measurement of visible light intensity or illuminance which it makes is supplied to the controller which operates the display device 32 (such as controller 24b). The controller operates to adjust the luminous intensity of the displayed thermal image in response to the measured visible intensity, with the aim of providing a balance between the brightness of the visible image and the thermal image that allows the observer to see both images. Alternatively, one of the images may be suppressed or enhanced compared to the other by suitable adjustment of the brightness of the thermal image.

Beam splitters are often thin and fragile, making them unsuitable for use in an apparatus intended for portable use. Subjecting the apparatus to shock or vibration can cause the beam splitter to break. Such conditions could easily occur with a handheld unit. According to the present invention, however, this problem can be readily addressed. Transparent conductive oxides can be deposited as layers or coatings on strengthened or toughened glass. Alternatively, a thin beam splitter with a transparent conductive oxide layer can be bonded to a thicker and/or tougher glass substrate. Such a substrate could be provided with antireflection coatings. These approaches give a more robust beam splitter, well-suited for use in a portable imaging apparatus. By contrast, it is more difficult to provide a robust beam splitter for separating thermal and visible radiation in a configuration which transmits the thermal radiation, such as the known multilayer dielectric stack beam splitters, because the substrate cannot be made from glass because it is not transparent to thermal radiation.

The use of a transparent conductive oxide layer on the beam splitter also allows the beam splitter to be configured with a heating function. This is useful in inclement weather conditions, for example to de-ice or demist the beam splitter. This is particularly applicable in an apparatus in which the beam splitter is exposed to the outer environment, and is not protected by a window over the common aperture. The conductive nature of the oxide layer allows the layer itself to be employed as a heating element. To achieve this, an electrical power supply such as a current source is electrically connected to the oxide layer so that current can be passed through the layer to warm it by resistive heating. The beam splitter should be mounted in an electrically isolated way to utilise this effect.

The present invention is not limited to the above-described embodiments. The various components may be arranged differently from the illustrated and described examples while not departing from the scope of the appended claims.

### REFERENCES

[1] Ferrante, Rand, Cabrera and Paloian, "Visible/long-wave infrared dichroic beamsplitter", Optical Engineering, vol. 44(6), document 063801, June 2005.
[2] US 4,902,081
[3] US 4,548,691
[4] US 3,949,259
[5] US 5,608,220

## Claims

1. An imaging apparatus comprising:
a beam splitter arranged to receive incident electromagnetic radiation, the beam splitter comprising a layer of transparent conductive oxide on the front surface of a substrate transparent to visible and/or near infrared wavelengths;
a first detector sensitive to thermal wavelengths and arranged to receive electromagnetic radiation reflected by the beam splitter; and
a viewing arrangement configured such that a viewer can view a first image detected by the first detector and a second image formed from electromagnetic radiation transmitted through the beam splitter.

2. An imaging apparatus according to claim 1, in which the transparent conductive oxide is indium tin oxide.

3. An imaging apparatus according to claim 1, in which the transparent conductive oxide is one of Cd₂SnO₄, ZnO doped with aluminium or fluorine, and SnO₂ doped with fluorine or antimony.

4. An imaging apparatus according to any one of claims 1 to 3, in which the substrate is glass.

5. An imaging apparatus according to claim 4, in which the substrate is strengthened glass.

6. An imaging apparatus according to any one of claims 1 to 5, in which the viewing arrangement shows the first image and the second image in a spatially coincident manner.

7. An imaging apparatus according to any one of claims 1 to 6, in which the viewing arrangement comprises a display screen, and the imaging apparatus further comprises:
a second detector sensitive to visible and/or near infrared wavelengths and arranged to detect electromagnetic radiation transmitted through the beam splitter to obtain the second image; and
a processor operable to receive the first image detected by the first detector and the second image detected by the second detector, process the images to merge them in a spatially coincident manner, and send the merged image for display on the display screen.

8. An imaging apparatus according to claim 7, in which the display screen comprises a liquid crystal display.

9. An imaging apparatus according to claim 7 or claim 8, in which the second detector comprises a CCD array.

10. An imaging apparatus according to claim 7 or claim 8, in which the second detector comprises a CMOS sensor.

11. An imaging apparatus according to any one of claims 1 to 6, further comprising:
a display device operable to display the first image from the first detector and;
a mirror which is partially reflective and partially transparent to visible wavelengths;
and in which:
the viewing arrangement is configured such that one of the first image as displayed on the display device and the second image comprising electromagnetic radiation transmitted through the beam splitter is viewed through the mirror and the other is viewed in reflection from the mirror.

12. An imaging apparatus according to claim 11, in which the display device is operable to project the first image from the first detector onto the mirror for viewing in reflection, and the second image is viewed through the mirror.

13. An imaging apparatus according to claim 12, in which the mirror comprises a semi-reflective and semi-transparent layer on a rear surface of the beam splitter.

14. An imaging device according to claim 12, in which the mirror is located behind and substantially parallel to the beam splitter.

15. An imaging apparatus according to claim 11, in which the display device is located behind the mirror for viewing of the first image through the mirror, and the mirror receives electromagnetic radiation transmitted through the beam splitter and reflects it for viewing of the second image in reflection from the mirror.

16. An imaging apparatus according to claim 15, further comprising one or more additional mirrors arranged to collect electromagnetic radiation transmitted through the beam splitter and to direct the collected radiation onto the mirror for reflection of the second image.

17. An imaging apparatus according to any one of claims 11 to 16, and further comprising a secondary detector sensitive to visible wavelengths and arranged to detect incoming visible radiation; and
a processor operable to receive a measurement of the intensity of the detected visible radiation and to adjust the intensity of the first image as displayed by the display device in accordance with the measured intensity.

18. An imaging apparatus according to claim 17, in which the secondary detector is mounted on the exterior of a housing of the apparatus.

19. An imaging apparatus according to claim 17, in which the secondary detector is positioned to detect visible radiation transmitted through the beam splitter.

20. An imaging apparatus according to claim 17, in which the secondary detector is positioned to detect visible radiation reflected from the beam splitter or the mirror.

21. An imaging apparatus according to any one of claims 11 to 20, in which the display device comprises an organic LED display.

22. An imaging apparatus according to any one of claims 11 to 20, in which the display device comprises a liquid crystal-on-silicon display.

23. An imaging apparatus according to any one of claims 1 to 22, in which the first camera comprises a microbolometer.

24. An imaging apparatus according to any one of claims 1 to 23, the apparatus further comprising an electrical power supply conductively connected to the layer of transparent conductive oxide such that the layer is operable as a heating element by passing current through the layer.

25. An imaging method comprising
receiving incident electromagnetic radiation on a beam splitter comprising a layer of transparent conductive oxide on a front surface of a substrate transparent to visible and/or near infrared wavelengths;
detecting electromagnetic radiation reflected by the beam splitter using a first detector sensitive to thermal wavelengths; and
presenting for viewing a first image detected by the first detector and a second image formed from electromagnetic radiation transmitted through the beam splitter.

26. A method according to claim 25, further comprising detecting electromagnetic radiation transmitted through the beam splitter using a second detector sensitive to visible and/or near infrared wavelengths to form the second image;
processing the first image and the second image to merge them in a spatially coincident manner; and
presenting the images for viewing by displaying the merged image on a display screen.

27. A method according to claim 25, further comprising:
displaying the first image from the first camera on a display device;
and arranging a mirror which is partially reflective and partially transmissive to visible wavelengths such that presenting the first and second images for viewing comprises presenting one of the first image as displayed on the display device and the second image comprising electromagnetic radiation transmitted through the beam splitter for viewing in transmission through the mirror and the other for viewing in reflection from the mirror.
